# EUROPEAN PATENT SPECIFICATION

(11) **EP 3 590 061 B1**
(45) Date of publication and mention of the grant of the patent: **13.09.2023**
(21) Application number: 18710947.5
(22) Date of filing: 21.02.2018
(51) Int. Cl.: G06F 21/50

(54) **MANAGING DATA ENCRYPTING APPLICATION**
VERWALTUNG EINER DATENVERSCHLÜSSELUNGSANWENDUNG
GESTION D'APPLICATION DE CRYPTAGE DE DONNÉES

(30) Priority: 01.03.2017 US 201715446956
(43) Date of publication of application: 08.01.2020
(73) Proprietor: CA, Inc., San Jose, CA 95131 (US)
(72) Inventor: LI, Qing, Cupertino, CA 95014 (US); CHEN, Joseph, Manhattan Beach, CA 90266 (US); UMLAND, Torrey, Torrance, CA 90504 (US); STAHL, Dave, San Jose, CA 95119 (US); GRIGORYAN, Tigran, Montrose, CA 91020 (US); CHEN, Min, Hao, Milpitas, CA 95035 (US)
(74) Representative: Dilg, Haeusler, Schindelmann Patentanwaltsgesellschaft mbH
(86) International application number: PCT/US2018/019049
(87) International publication number: WO 2018/160413

(56) References cited:
- US-A1- 2013 121 490
- US-B1- 8 468 595

## Description

### BACKGROUND

The use of computer systems and computer-related technologies continues to increase at a rapid pace. This increased use of computer systems has influenced the advances made to computer-related technologies. Computer systems have increasingly become an integral part of the business world and the activities of individual consumers. Computer systems may be used to carry out several business, industry, and academic endeavors.

The widespread use of computers and mobile devices has caused an increased presence of malicious programs such as rootkits, spyware, trojans, and the like. Malware programmers are continually adapting to the improvements made in malware detection, which creates an ongoing cycle of malware techniques adapting to improvements in malware detection.

US 8,468,595 B1 discloses an encrypted content filtering technique which uses a code injector, injected code pieces and an analysis application. In a Microsoft^{®} Windows^{™} operating system platform the code injector may be configured as a kernel mode device driver that performs continuous monitoring of loaded and executing applications. The code injector injects hooking codes as soon the target library or executable files are loaded or launched (executed). The analysis application may be loaded as a user mode Windows^{™} service to communicate with injected code to get the raw data and sent back control commands to the injected code based on the analysis results in the security policy the control commands correspond to predetermined or preconfigured policies as to how the application should continue processing based on characteristics of the deep analysis of the raw data. The injected code may include computer instructions that is inserted or injected into the target or application to execute in a context of the target (application) process. The injected code is configured to extract (or capture) the raw data, create (or generate) a communication pipe, and send the captured raw data to the analysis application. The injected code initially may be injected by the code injector using a hooking injection technique, for example, API hooking. In this context of hooking the code injector inserts (or hooks) the appropriate code as described herein for analyzing the raw data prior to the application continuing on its execution path (e.g. before the data is encrypted). The executing injector code also creates a communication pipe between itself and the analysis application of the encrypted content filter to transfer the captured raw data. The injected code also receives the analysis results and action commands from the analysis application. In response to action commands, it can decide to fail the current API or bypass the current API. Action commands include commands such as block the processing or pass the processing down the flow of the executing application.

### SUMMARY

The present invention is defined by the appended independent claims. Preferred embodiments are set forth in the dependent claims.

According to at least one embodiment, a method for managing cloud based applications is described. In some cases, the present systems and methods may manage applications configured to encrypt data used by the application such as user data and/or system data. In one embodiment, the method may include detecting initiation of an application, detecting an action performed relative to the application, capturing the data associated with the detected action before the application encrypts the at least portion of the data, analyzing the captured data, and applying a network management policy to a packet flow based at least in part on the analyzing the captured data. In some cases, the application may be configured to encrypt at least a portion of data associated with the detected action. In some cases, the application may include at least one of an online application accessed via a web browser, a cloud based application, a web based application, a mobile application configured to access the Internet, and a desktop application configured to access the Internet.

In some embodiments, the method may include identifying, among a plurality of unidentified packet flows, a packet flow associated with the captured data, and determining at least one of a user identifier associated with the detected initiation of the application, an initiator of the application, an operating system process, a size of a file associated with the application, a file hash of the file, a file name, or any combination thereof.

In some embodiments, the method may include associating the identified packet flow with at least one of the captured data, the determined user identifier, the determined initiator of the application, an operating system process, the determined size of the file associated with the application, the determined file hash of the file, a file name, or any combination thereof. In some embodiments, the method may include classifying the captured data based at least in part on the analyzing of the captured data, the detected action, an application category associated with the application, a name associated with the application, or any combination thereof. In some embodiments, the method may include applying the network management policy to the identified packet flow based at least in part on the classification of the captured data. In some cases, an aspect of the network management policy may be applied based at least in part on a type of action detected relative to detecting the action performed.

In some cases, the detected action may include at least one of a user input relative to a user interface menu item of the application, a user input relative to a button of the application, a user input relative to an input box of the application, detecting data entered in the application, identifying a file upload to the application, identifying a file download from the application, identifying a file deletion in relation to the application, identifying a modification of data via the application, or any combination thereof. In some embodiments, the method may include identifying the button of the application and interpreting the detected action based at least in part on the identification of the button in relation to a detected cursor location.

In some embodiments, the method may include identifying an identifier associated with the captured data. In some cases, the identifier may include at least one of an application protocol, a layer-4 protocol, a layer-3 protocol, a layer-4 port number, a layer-3 address, or any combination thereof.

In some embodiments, the method may include performing a security action based at least in part on the analyzing. In some cases, performing the security action may include detecting suspicious activity associated with the application and identifying one or more devices of an intranet associated with the suspicious network traffic. In some cases, performing the security action may include mapping the suspicious traffic in relation to the one or more devices of the intranet and identifying an origin of the suspicious network traffic based at least in part on the mapping.

A computing device configured for managing cloud based applications is also described. The computing device may include a processor and memory in electronic communication with the processor. The memory may store computer executable instructions that when executed by the processor cause the processor to perform the steps of detecting initiation of an application, detecting an action performed relative to the application, capturing the data associated with the detected action before the application encrypts the at least portion of the data, analyzing the captured data, and applying a network management policy to a packet flow based at least in part on the analyzing the captured data. In some cases, the application may be configured to encrypt at least a portion of data associated with the detected action.

A non-transitory computer-readable storage medium storing computer executable instructions is also described. When the instructions are executed by a processor, the execution of the instructions may cause the processor to perform the steps of detecting initiation of an application, detecting an action performed relative to the application, capturing the data associated with the detected action before the application encrypts the at least portion of the data, analyzing the captured data, and applying a network management policy to a packet flow based at least in part on the analyzing the captured data. In some cases, the application may be configured to encrypt at least a portion of data associated with the detected action.

These and other embodiments, features, and advantages will be more fully understood upon reading the following detailed description in conjunction with the accompanying drawings and claims.

### BRIEF DESCRIPTION OF THE DRAWINGS

The accompanying drawings illustrate a number of exemplary embodiments and are a part of the specification. Together with the following description, these drawings demonstrate and explain various principles of the instant disclosure.
FIG. 1 is a block diagram illustrating one embodiment of an environment in which the present systems and methods may be implemented;
FIG. 2 is a block diagram illustrating one example of a data classification module;
FIG. 3 shows a block diagram of a data flow in accordance with various aspects of this disclosure;
FIG. 4 is a flow diagram illustrating one embodiment of a method in accordance with various aspects of this disclosure;
FIG. 5 is a flow diagram illustrating one embodiment of a method in accordance with various aspects of this disclosure;
FIG. 6 depicts a block diagram of a computer system suitable for implementing the present systems and methods; and
FIG. 7 depicts a block diagram of a computer system suitable for implementing the present systems and methods.

While the embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the instant disclosure covers all modifications, equivalents, and alternatives falling within the scope of the appended claims.

### DETAILED DESCRIPTION OF EXEMPLARY EMBODIMENTS

The systems and methods described herein relate to applications configured to encrypt data. Examples of such applications include cloud-based applications, web-based applications, and non-web-based applications. More specifically, the systems and methods described herein relate to managing events related to cloud based applications, web based applications, and non-web-based encrypting applications in relation to the monitoring of multiple computing devices. In some cases, a monitored application may implement custom, non-standard, or proprietary encryption techniques, which a third party may be unable to decrypt. Thus, the present systems and methods may capture the data to be encrypted before the application encrypts it. Although certain applications such as cloud-based application are used herein as examples, it is understood that the systems and methods described herein apply to any application configured to encrypt data.

Computer users are increasingly using cloud based applications such as web based office applications, cloud storage applications, and the like, to perform tasks that have typically been performed and stored on a local computer. As one example, cloud based applications are increasingly being used by workers in enterprise environments. A cloud-based application may include an application that partially executes on a local client machine and a remote computing device such as a cloud application server. A cloud-based application may include an application that stores data related to the cloud based application in a remote cloud storage location. For example, a user may use a cloud based word processing application to create a text document. At least a portion of the processes of the cloud based word processing application executed to create the text document may be executed on a remote cloud application server and at least a portion of the processes may be executed on a user's local client machine to create the text document. The text of the text document may be stored primarily on a remote cloud storage server. For example, text entered by a user of the cloud based word processing application may be stored on a remote cloud storage server. Additionally, or alternatively, the text of the document may be stored on the local client machine.

One embodiment of the present systems and methods includes leveraging information gathered in relation to one or more cloud based applications and transmitting the information to a network processing device to classify and manage the cloud based and encrypted application traffic in real time. In some cases, the network processing device may include an inline network processing device.

In one embodiment, the present systems and methods may classify multiple applications. The multiple applications may include desktop applications, server applications, web based application, cloud based application, mobile applications, or any combination thereof. In some cases, the multiple applications may include applications configured to encrypt at least a portion of system data and/or user data associated with the application. In some cases, an application may encrypt data using proprietary encryption technology, increasing the difficulty in identifying an application and/or data of the application.

In some embodiments, the present systems and methods may track every packet and every TCP/UDP flow of a client machine or end point. In some cases, for each flow, the systems and methods may transmit, in real time, the information gathered from the end point to a network processing device. As one example, the gathered information may include an n-tuple such as "application X started," "menu item Y clicked," "TCP connection Z triggered TCP," and so on. Once the gathered information reaches a network processing device, the network processing device may analyze the information and apply an application ID to a particular packet flow of the end point that is being monitored. The systems and methods may enable the network processing device to provide fine-grained classification on traffic flows of specific cloud based applications such as a particular cloud based word processing application, etc. In some cases, network processing devices may be deployed on each physical network segment or node as inline network devices. In some cases, a feedback loop provided by the multiple inline network devices may enable a network processing device to provide a holistic view on the enterprise with respect to which client machine is running which monitored application, etc. In addition, the network processing device may be clustered to report on traffic details each inline network device processes. The inline network processing devices may transmit monitored data in real time. In some cases, the feedback loop may enable the network processing device to detect a point of origin of suspicious traffic or potentially malicious traffic and to generate a map of how the suspicious traffic flow permeates across the network. For example, the order in which the real-time information is received by the network processing device and/or time stamps of the information received by the network processing device may enable the network processing device to determine where a suspicious process originates, how the suspicious process spreads, where the process spreads to, and when the suspicious process spreads over a network of computing devices and network devices.

Benefits of the present systems and methods include identifying and separating productivity traffic from recreational traffic and then prioritizing and managing the traffic accordingly. Benefits also include classifying specific actions within an application, e.g., work-related video conferencing vs. a personal chat in a video conferencing application, and then managing the associated flows respectively, such as blocking personal chat while permitting work-related video conferencing. The present systems and methods enable encrypted traffic management without having to decrypt the traffic in the network path such as by using a proxy. The present systems and methods enable encrypted traffic management even when the application attempts to detect and circumvent middle-boxes such as a proxy or next generation firewall (NGFW). The present systems and methods enable encrypted traffic management regardless of the encryption algorithms and key exchange methods. The present systems and methods enable fine-grained application management, applying policies against specific actions within an application, rather than applying policies to the application as a whole.

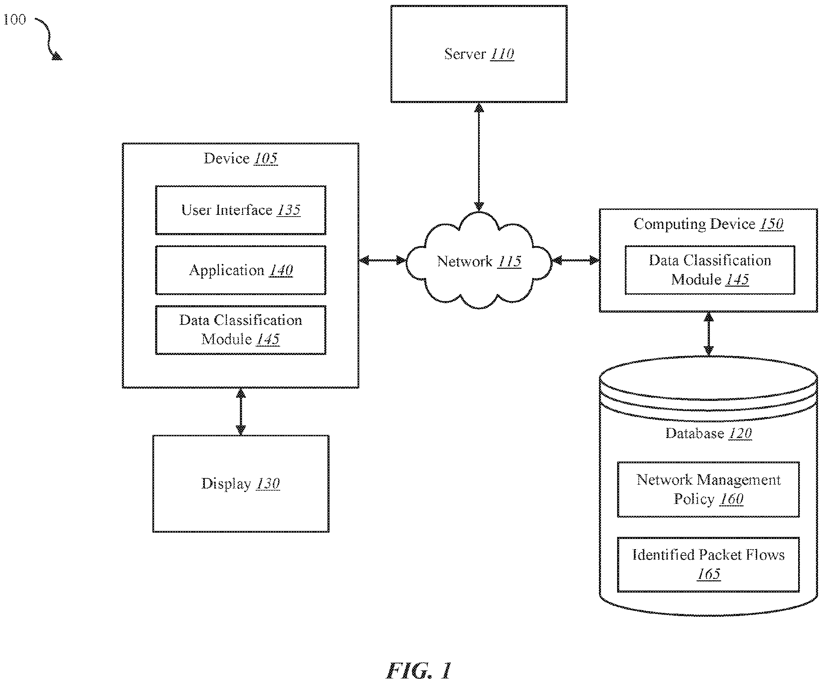

**FIG. 1** is a block diagram illustrating one embodiment of an environment 100 in which the present systems and methods may be implemented. In some embodiments, the systems and methods described herein may be performed on a device (*e.g.,* device 105). As depicted, the environment 100 may include a device 105, server 110, a display 130, a computing device 150, and a network 115 that allows the device 105, the server 110, and the computing device 150 to communicate with one another.

Examples of the device 105 may include any combination of mobile devices, smart phones, personal computing devices, computers, laptops, desktops, servers, media content set top boxes, or any combination thereof.

Examples of computing device 150 may include any combination of a network processing device, a mobile computing device, a laptop, a desktop, a server, a media set top box, or any combination thereof. In one embodiment, computing device 150 may include a networking device within network 115. Examples of server 110 may include at least one of a cloud application server, a cloud storage server, a remote cloud storage server, a data server, a cloud server, a server associated with an automation service provider, proxy server, mail server, web server, application server, database server, communications server, file server, home server, mobile server, name server, or any combination thereof.

In some configurations, the device 105 may include a user interface 135, application 140, and data classification module 145. Although the components of the device 105 are depicted as being internal to the device 105, it is understood that one or more of the components may be external to the device 105 and connect to device 105 through wired and/or wireless connections. In some embodiments, application 140 may be installed on computing device 150 in order to allow a user to interface with a function of device 105, data classification module 145, and/or server 110.

In some embodiments, device 105 may communicate with server 110 via network 115. Examples of network 115 may include any combination of cloud networks, local area networks (LAN), wide area networks (WAN), virtual private networks (VPN), wireless networks (using 802.11, for example), cellular networks (using 3G and/or LTE, for example), etc. In some configurations, the network 115 may include the Internet. It is noted that in some embodiments, the device 105 may not include a data classification module 145. For example, device 105 may include application 140 that allows device 105 to interface with an external machine via data classification module 145 located on another device such as computing device 150 and/or server 110. In some embodiments, device 105, and server 110 may include a data classification module 145 where at least a portion of the functions of data classification module 145 are performed separately and/or concurrently on device 105, and/or server 110. Likewise, in some embodiments, a user may access the functions of device 105 (directly or through device 105 via data classification module 145) from computing device 150. For example, in some embodiments, computing device 150 includes a mobile application that interfaces with one or more functions of device 105, data classification module 145, and/or server 110.

In some embodiments, computing device 150 may be coupled to database 120. Database 120 may be internal or external to the computing device 150. In one example, device 105 may be coupled directly to database 120, database 120 being internal or external to device 105. Database 120 may include network management policy 160 and identified packet flows 165. In one example, computing device 150 may implement an aspect of network management policy 160 in conjunction with at least one of the identified packet flows 165. For example, computing device 150 may identify a particular packet flow being associated with a particular cloud based application executing in conjunction with device 105. Upon identifying the particular packet flow, an aspect of or associated with the cloud based application, or any combination thereof, computing device 150 may implement an aspect of network management policy 160 in relation to device 105. As one example, computing device 150 may apply a packet shaping policy in relation to the identified packet flow.

Data classification module 145 may enable a computing device to associate activity of a cloud based application on a client machine with a particular packet flow and apply a network policy based on an aspect of the packet flow an aspect of the cloud based application, or any combination thereof (e.g., bandwidth being used by the cloud based application, bandwidth used by a client machine executing the cloud based application, total bandwidth available to a network of client machines that includes the client machine on which the cloud application executes, a time of day, user type, type of cloud application, etc.). In some embodiments, data classification module 145 may be configured to perform the systems and methods described herein in conjunction with user interface 135 and application 140. User interface 135 may enable a user to interact with, control, and/or program one or more functions of data classification module 145. Further details regarding the data classification module 145 are discussed below.

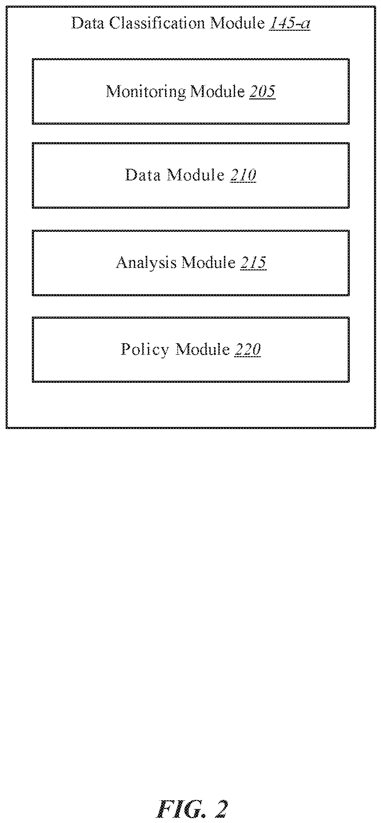

**FIG. 2** is a block diagram illustrating one example of a data classification module 145-a. Data classification module 145-a may be one example of data classification module 145 depicted in FIG. 1. As depicted, data classification module 145-a may include monitoring module 205, data module 210, analysis module 215, and policy module 220.

In some embodiments, at least a portion of data classification module 145 may be implemented in an application on a local machine (e.g., device 105 of FIG. 1), a remote computing device (e.g., computing device 150 of FIG. 1), a network device (e.g., network 115 of FIG. 1), a server (e.g., server 110 of FIG. 1), or any combination thereof.

In one embodiment, monitoring module 205 may be configured to detect initiation of a cloud based application and/or web based application. In some cases, monitoring module 205 may detect initiation of a cloud based application in relation to a client machine. As one example, monitoring module 205 may hook one or more application programming interfaces (APIs) associated with a cloud based application. In some embodiments, in conjunction with the monitoring module 205 an application may be configured to detect the initiation of the cloud based application on a client machine. In some cases, the cloud based application is a third party application in relation to the application that is configured to monitor and/or detect initiation of the cloud based application.

In some cases, the cloud based application may include at least one of an online application accessed via a web browser, a cloud based application, a web based application, a mobile application configured to access the Internet, and a desktop application configured to access the Internet, or any combination thereof. In some cases, the mobile application and/or desktop application may be configured to encrypt data associated with operations of the desktop application. In some cases, the mobile application and/or desktop application may encrypt data independent of a browser. For example, mobile/ desktop application such as a video conferencing application may capture unencrypted video, encrypt the video, and transmit the encrypted video to a remote computing device. Accordingly, monitoring module 205 may capture the unencrypted video before the mobile/desktop application encrypts it.

In some embodiments, monitoring module 205 may be configured to detect an action performed relative to the cloud based application. In some cases, the cloud based application may be configured to encrypt at least a portion of data associated with the detected action.

In one embodiment, data module 210 may be configured to capture the data associated with the detected action before the cloud based application encrypts the at least portion of the data. In some embodiments, data module 210 may be configured to associate a packet flow with the captured data. Additionally, or alternatively, data module 210 may be configured to associate an identified packet flow with the determined user identifier, the determined initiator of the cloud based application, the determined size of the file associated with the cloud based application, the determined file hash of the file, a file name such as a name of a predetermined executable file, or any combination thereof.

In some embodiments, data module 210 may be configured to classify the captured data. In some cases, data module 210 may classify the captured data based at least in part on analysis performed on the captured data by the analysis module 215. Additionally, or alternatively, data module 210 may classify the captured data based at least in part on one or more aspects of the detected action.

In some cases, analysis module 215 may classify the captured data based at least in part on an application category associated with the cloud based application. As one example, a cloud based application on the client machine may be categorized as at least one of a word processing application, spreadsheet application, database application, multimedia application, presentation application, cloud storage application, cloud storage office application, social media application, audio streaming application, video streaming application, a video conferencing application, a news or media application, enterprise application, educational application, content access application, anti-viral application, email application, internet browser application, graphics application, communication application, or any combination thereof. In some cases, a cloud based application may be categorized as a productivity application or work-related application. Additionally, a cloud based application may be categorized as a personal application or recreational application.

In one embodiment, analysis module 215 may be configured to analyze the captured data. In some embodiments, analysis module 215 may be configured to identify a packet flow associated with the captured data. In some cases, analysis module 215 may identify the packet flow among a plurality of unknown or unidentified packet flows. For example, analysis module 215 may identify one or more packet flows from device 105 of FIG. 1, one or more packet flows from computing device 150 of FIG. 1, and/or one or more packet flows from server 110 of FIG. 1. Based on the plurality of unidentified packet flows, analysis module 215 may identify the packet flow associated with the captured data.

In some embodiments, analysis module 215 may be configured to determine at least one of a user identifier associated with the detected initiation of the cloud based application, an initiator of the cloud based application, a size of a file associated with the cloud based application, a file hash of the file, or any combination thereof. In some cases, the remote machine may be external to an internal network to which the client machine is connected or of which the client machine is a node of the internal network. Alternatively, the remote machine may be a machine on the same internal network to which the client machine is connected.

In some embodiments, analysis module 215 may be configured to identify an identifier associated with the captured data. In some cases, the identifier may include an application protocol such as a hypertext transfer protocol (HTTP) or a secure HTTP protocol. In some cases, the identifier may include a universal resource locator (URL), a domain name, or any combination thereof. Additionally, or alternatively, the identifier may include a layer-4 protocol such as a transmission control protocol (TCP) or user datagram protocol (UDP). In some cases, the identifier may include a layer-3 protocol such as an internet protocol (IP) address, a source IP address, a destination IP address, or any combination thereof. Additionally, or alternatively, the identifier may include one or more layer-4 port numbers such as a TCP source port, a TCP destination port, a UDP source port, a UDP destination port, or any combination thereof. In some embodiments, analysis module 215 may detect two or more cloud based applications on the same client machine. In some cases, analysis module 215 may distinguish between the two or more cloud based applications based on identifying at least one identifier for each of the two or more cloud based applications.

In some cases, the captured data may include data entered in a cloud based application such as text entered into an email or word processing application, a file uploaded via the cloud based application to an external location such as to a cloud storage, a file deleted via the cloud based application such as deleting a file in cloud storage, or any combination thereof. In some cases, the detected action may include detecting playing a video, streaming a pod cast, initiating a chat session, starting a video call, or any combination thereof. In some examples, the action detected by the monitoring module 205 may include at least one of a user input relative to a user interface menu item of the cloud based application, a user input relative to a button of the cloud based application, user input or data relative to an input box or text box of the cloud based application, detecting data entered in the cloud based application, identifying a file upload to the cloud based application, identifying a file download from the cloud based application, identifying a file deletion in relation to the cloud based application, identifying a modification of data via the cloud based application, or any combination thereof.

In some embodiments, analysis module 215 may be configured to identify the button of the cloud based application. In some examples, analysis module 215 may be configured to interpret the detected action based at least in part on the identification of the button in relation to the detected cursor location. In some cases, analysis module 215 may be configured to detect where a cursor is located relative to a user interface of the cloud based application. In some cases, analysis module 215 may be configured to detect a button of the cloud based application being selected, detect user input in relation to the cloud based application, or any combination thereof.

In one embodiment, policy module 220 may be configured to apply a network management policy to the identified packet flow based at least in part on the analysis of the captured data performed by analysis module 215.

In some embodiments, policy module 220 may be configured to apply the network management policy to the identified packet flow based at least in part on the classification of the captured data. In some cases, the network management policy may include a network bandwidth policy that determine how much bandwidth to allocate the client machine based at least in part on a type of cloud based application initiated on a client machine. Additionally, or alternatively, the network management policy may include a network bandwidth policy that determine how much bandwidth to allocate a client machine based at least in part on a priority assigned a particular user identifier associated with the cloud based application, a user type or type of user using the cloud based application (e.g., standard user, administrator, etc.), a time of day the cloud based application is being initiated and/or used, an amount of bandwidth that is currently available to a client machine, an amount of bandwidth a cloud based application is consuming, or any combination thereof.

Additionally, or alternatively, the network management policy may include a packet shaping policy that determines how much bandwidth to provide a particular packet flow. For example, a client machine may include two or more packet flows. The network management policy may apply a first bandwidth to a first packet flow on a client machine and apply a second bandwidth to a second packet flow on the same client machine.

In some cases, the network management policy may include a data security policy that determines a sensitivity level of the data associated with a cloud based application. For example, if a cloud based application is associated with unencrypted user data generated at a client machine, the data may be assigned a relatively low sensitivity level. On the other hand, if the web application is associated with encrypted data, data that originates externally from the client machine, data that originates from a secured or restricted storage area, or any combination thereof, the data may be assigned a relatively high sensitivity level.

In some cases, an aspect of the network management policy is applied based at least in part on a type of action detected relative to detecting the action performed. For example, a first policy may be applied to a packet flow at a first time and then a second policy may be applied to the same packet flow at a second time after the first time based on an action a user performs after the first time and before the second time. For example, a user may take the action of accessing a restricted storage location after the first time and before the second time.

In some examples, a security action may be performed based at least in part on a result of the analysis module 215 analyzing the captured data. In some cases, a security action may be implemented in conjunction with the policy module 220 applying a policy. For example, a security action may be performed based at least in part on the classification of the captured data. As one example, the security actions may include blocking one or more aspects of an application based on analysis of the application. For example, a chat session may be blocked based on analysis of pre-encrypted data associated with the chat session. In some cases, performing the security action may include detecting suspicious activity associated with the cloud based application, identifying one or more devices of an intranet associated with the suspicious network traffic, mapping the suspicious traffic in relation to the one or more devices of the intranet, identifying an origin of the suspicious network traffic based at least in part on the mapping, or any combination thereof.

As one example, server 110 of FIG. 1 may represent a third-party server providing a cloud service such as cloud applications and/or cloud storage. In this example, device 105 of FIG. 1 may represent a client machine configured as an endpoint device in an enterprise network, and computing device 150 of FIG. 1 may represent a network processing device in the enterprise network configured to monitor one or more aspects of device 105. In one example, computing device 150 may include a dedicated network processing device configured to monitor multiple client machines in the enterprise network, including device 105. Additionally, or alternatively, one example of computing device 105 may be implemented in a router connected to the enterprise network. In this example, device 105 may initiate a connection to a cloud service of server 110. Accordingly, monitoring module 205 on device 105 may detect initiation of the connection. In one example, device 105 may perform one or more actions in relation to a cloud service of server 110. For example, device 105 may instruct server 110 to upload a file, to download a file, to delete a file on server 110, to play a media file, to stream a media file, to initiate a chat session, to initiate a video conferencing application, or any combination thereof. Accordingly, monitoring module 205 on device 105 may detect the action. In some cases, data module 210 on device 105 may be configured to capture the data associated with the detected action before device 105 encrypts the associated data. In some cases, data module 210 may send the captured data to computing device 150. Accordingly, analysis module 215 on computing device 150 may analyze the captured data. As one example, policy module 220 on computing device 150 may apply one or more policies to device 105 based on the analysis. Accordingly, data classification module 145-a may detect aspects of applications on client machines that are configured to encrypt data and apply network and/or security policies based on an analysis of the detected aspects.

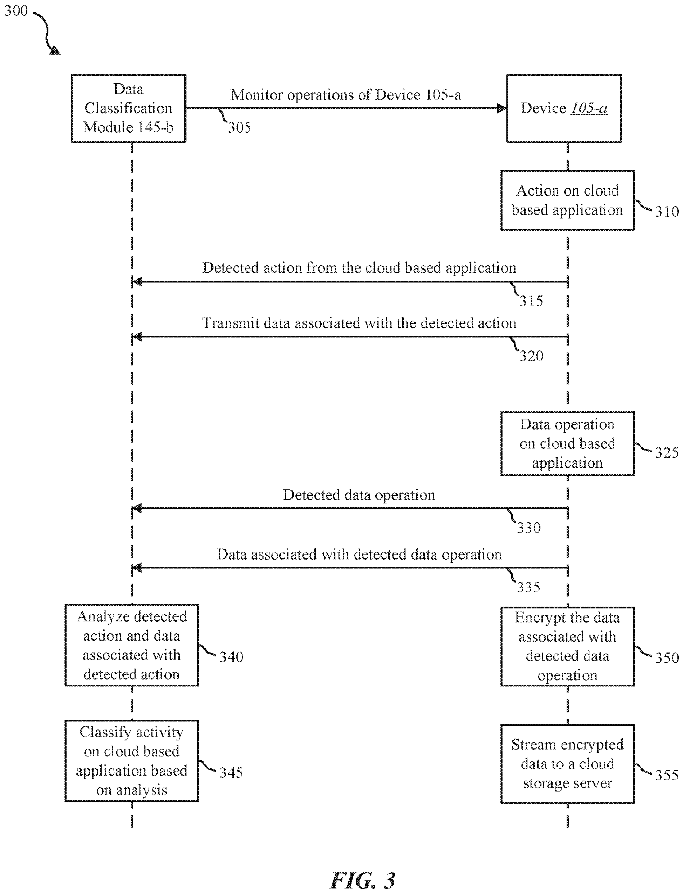

**FIG. 3** shows a block diagram of a data flow 300 in accordance with various aspects of this disclosure. The data flow 300 illustrates the flow of data between data classification module 145-b and a device 105-a. The data classification module 145-b may be an example of data classification module 145-b from FIGs. 1 and/or 2. Device 105-a may be an example of device 105 and/or computing device 150 of FIG. 1. In some cases, data classification module 145-b may be installed on and perform one or more operations in relation to a computing device such as a smart phone, desktop, laptop, remote server (e.g., device 105, computing device 150, and/or server 110 of FIG. 1).

At 305, data classification module 145-b monitors one or more specific operations of device 105-a. For example, data classification module 145-b may be configured to monitor operations of device 105-a related to a specific cloud based application. At block 310, device 105-a may execute an action in relation to a cloud based application.

At 315, data classification module 145-b detects the action of block 310 based at least in part on the monitoring of device 105-a at 305. At 320, data classification module 145-b transmits data associated with the detected action.

At block 325, device 105-a may perform a data operation in relation to the cloud based application. In some cases, device 105-a may execute a data operation initiated by a user of a client machine by which the cloud based application is accessed. At 330, data classification module 145-b may detect the data operation. At 335, data classification module 145-b may obtain data associated with the detected data operation.

At block 340, data classification module 145-b may analyze at least one of the detected action and the data associated with the detected action. At block 345, data classification module 145-b may classify the activity associated with the cloud based application based on the analysis of block 340.

At block 350, device 105-a may encrypt the data associated with the detected data operation of block 325. At block 355, device 105-a may stream the encrypted data to a cloud storage server and/or a cloud application server. As shown, blocks 350 and 355 are assigned reference numbers subsequent to the reference numbers of blocks 340 and 345. Accordingly, in some embodiments, the actions associated with block 350 may occur after block 340 and/or block 345. Similarly, actions associated with block 355 may occur after block 340 and/or block 345. Alternatively, in some examples, actions associated with block 350 may occur before block 340 and/or block 345. Similarly, in some examples, actions associated with block 355 may occur before block 340 and/or block 345.

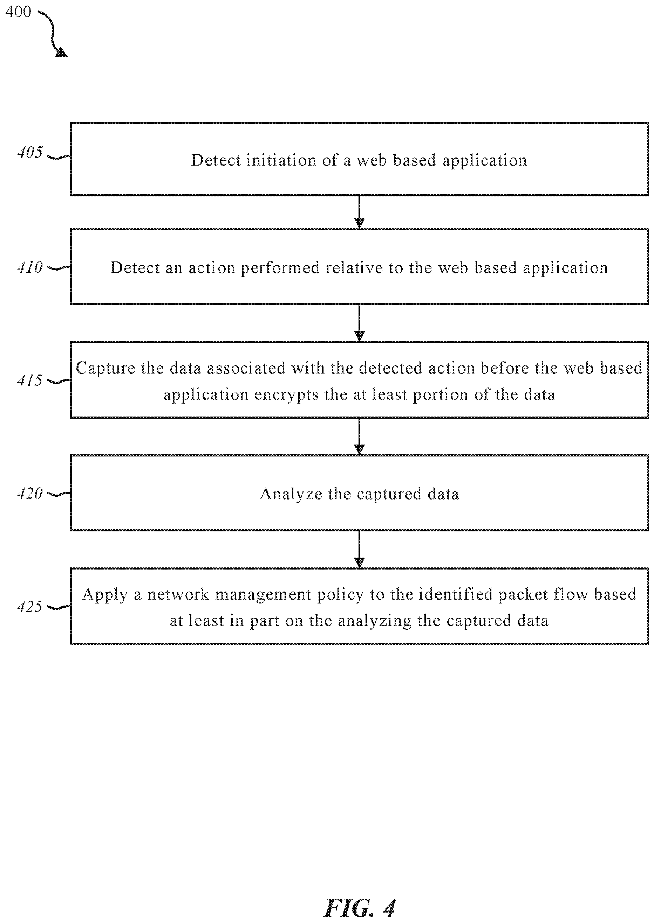

**FIG. 4** is a flow diagram illustrating one embodiment of a method 400 for managing cloud based applications. In some configurations, the method 400 may be implemented by the data classification module 145 illustrated in FIGs. 1, 2, and/or 3. In some configurations, the method 400 may be implemented in conjunction with device 105, server 110, network 115, database 120, components thereof, or any combination thereof.

At block 405, method 400 may include detecting initiation of a cloud based application. At block 410, method 400 may include detecting an action performed relative to the cloud based application. In some cases, the cloud based application may be configured to encrypt at least a portion of data associated with the detected action. At block 415, method 400 may include capturing the data associated with the detected action before the cloud based application encrypts the at least portion of the data. At block 420, method 400 may include analyzing the captured data. At block 425, method 400 may include applying a network management policy to the identified packet flow based at least in part on the analyzing the captured data.

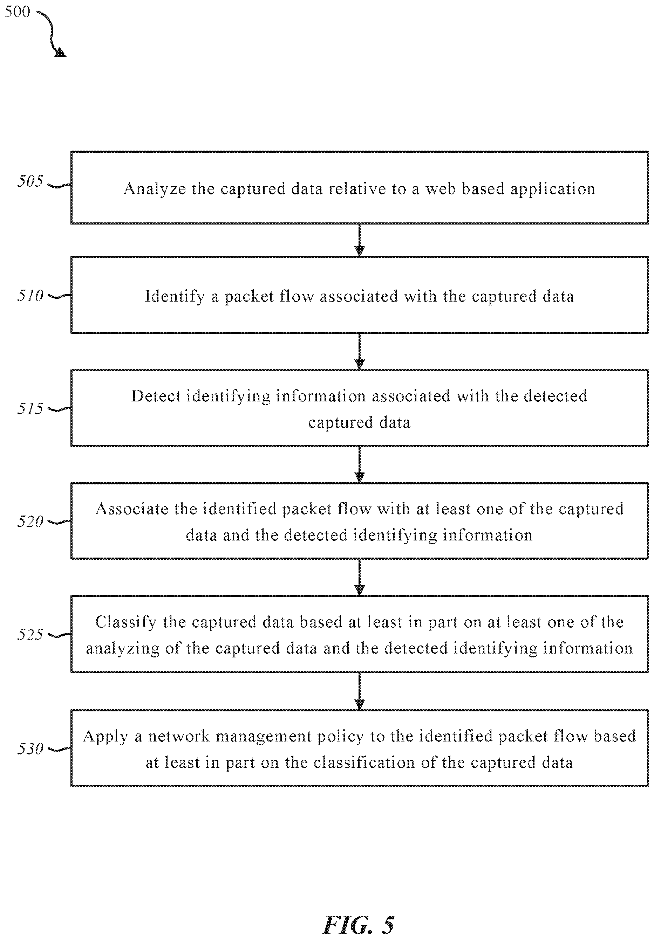

**FIG. 5** is a flow diagram illustrating one embodiment of a method 500 for managing cloud based applications. In some configurations, the method 500 may be implemented by the data classification module 145 illustrated in FIGs. 1, 2, and/or 3. In some configurations, the method 500 may be implemented in conjunction with device 105, server 110, network 115, database 120, components thereof, or any combination thereof.

At block 505, method 500 may include analyzing the captured data relative to a web based application. At block 510, method 500 may include identifying a packet flow associated with the captured data. At block 515, method 500 may include detecting identifying information associated with the detected captured data. At block 520, method 500 may include associating the identified packet flow with at least one of the captured data and the detected identifying information. At block 525, method 500 may include classifying the captured data based at least in part on at least one of the analyzing of the captured data and the detected identifying information. At block 530, method 500 may include applying a network management policy to the identified packet flow based at least in part on the classification of the captured data.

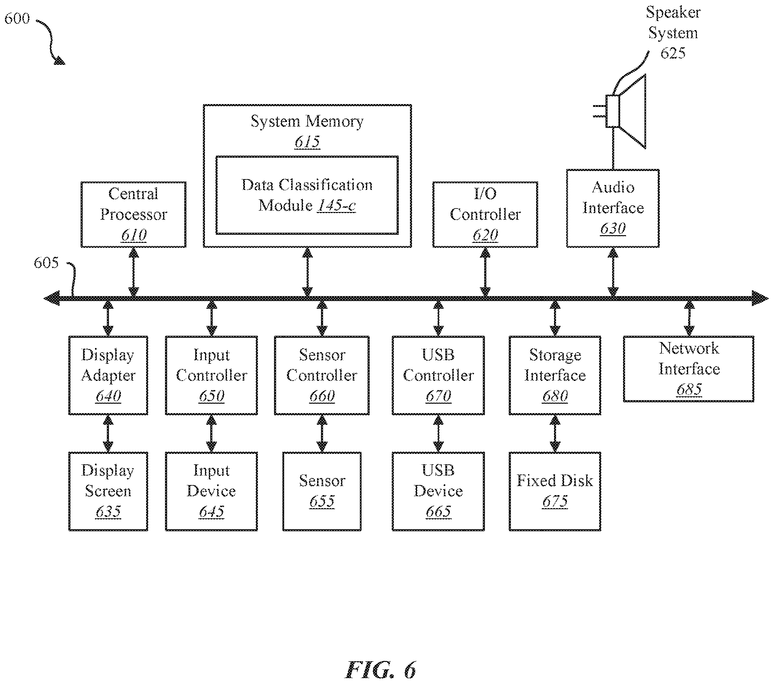

**FIG. 6** depicts a block diagram of a computing device 600 suitable for implementing the present systems and methods. The device 600 may be an example of device 105, computing device 150, and/or server 110 illustrated in FIG. 1. In one configuration, device 600 includes a bus 605 which interconnects major subsystems of device 600, such as a central processor 610, a system memory 615 (typically RAM, but which may also include ROM, flash RAM, or the like), an input/output controller 620, an external audio device, such as a speaker system 625 via an audio output interface 630, an external device, such as a display screen 635 via display adapter 640, an input device 645 (e.g., remote control device interfaced with an input controller 650), multiple USB devices 665 (interfaced with a USB controller 670), and a storage interface 680. Also included are at least one sensor 655 connected to bus 605 through a sensor controller 660 and a network interface 685 (coupled directly to bus 605).

Bus 605 allows data communication between central processor 610 and system memory 615, which may include read-only memory (ROM) or flash memory (neither shown), and random access memory (RAM) (not shown), as previously noted. The RAM is generally the main memory into which the operating system and application programs are loaded. The ROM or flash memory can contain, among other code, the Basic Input-Output system (BIOS) which controls basic hardware operation such as the interaction with peripheral components or devices. For example, the data classification module 145-c to implement the present systems and methods may be stored within the system memory 615. Applications (*e.g*., application 140) resident with device 600 are generally stored on and accessed via a non-transitory computer readable medium, such as a hard disk drive (*e.g*., fixed disk 675) or other storage medium. Additionally, applications can be in the form of electronic signals modulated in accordance with the application and data communication technology when accessed via interface 685.

Storage interface 680, as with the other storage interfaces of device 600, can connect to a standard computer readable medium for storage and/or retrieval of information, such as a fixed disk drive 675. Fixed disk drive 675 may be a part of device 600 or may be separate and accessed through other interface systems. Network interface 685 may provide a direct connection to a remote server via a direct network link to the Internet via a POP (point of presence). Network interface 685 may provide such connection using wireless techniques, including digital cellular telephone connection, Cellular Digital Packet Data (CDPD) connection, digital satellite data connection, or the like. In some embodiments, one or more sensors (*e.g*., motion sensor, smoke sensor, glass break sensor, door sensor, window sensor, carbon monoxide sensor, and the like) connect to device 600 wirelessly via network interface 685.

Many other devices and/or subsystems may be connected in a similar manner (*e.g.*, entertainment system, computing device, remote cameras, wireless key fob, wall mounted user interface device, cell radio module, battery, alarm siren, door lock, lighting system, thermostat, home appliance monitor, utility equipment monitor, and so on). Conversely, all of the devices shown in FIG. 6 need not be present to practice the present systems and methods. The devices and subsystems can be interconnected in different ways from that shown in FIG. 6. The aspect of some operations of a system such as that shown in FIG. 6 are readily known in the art and are not discussed in detail in this application. Code to implement the present disclosure can be stored in a non-transitory computer-readable medium such as one or more of system memory 615 or fixed disk 675. The operating system provided on device 600 may be iOS^{®}, ANDROID^{®}, MS-DOS^{®}, MS-WINDOWS^{®}, OS/2^{®}, UNIX^{®}, LINUX^{®}, or another known operating system.

Moreover, regarding the signals described herein, those skilled in the art will recognize that a signal can be directly transmitted from a first block to a second block, or a signal can be modified (e.g., amplified, attenuated, delayed, latched, buffered, inverted, filtered, or otherwise modified) between the blocks. Although the signals of the above described embodiment are characterized as transmitted from one block to the next, other embodiments of the present systems and methods may include modified signals in place of such directly transmitted signals as long as the informational and/or functional aspect of the signal is transmitted between blocks. To some extent, a signal input at a second block can be conceptualized as a second signal derived from a first signal output from a first block due to physical limitations of the circuitry involved (e.g., there will inevitably be some attenuation and delay). Therefore, as used herein, a second signal derived from a first signal includes the first signal or any modifications to the first signal, whether due to circuit limitations or due to passage through other circuit elements which do not change the informational and/or final functional aspect of the first signal.

The signals associated with system 600 may include wireless communication signals such as radio frequency, electromagnetics, local area network (LAN), wide area network (WAN), virtual private network (VPN), wireless network (using 802.11, for example), cellular network (using 3G and/or LTE, for example), and/or other signals. The network interface 685 may enable one or more of WWAN (GSM, CDMA, and WCDMA), WLAN (including BLUETOOTH^{®} and Wi-Fi), WMAN (Wi-MAX) for mobile communications, antennas for Wireless Personal Area Network (WPAN) applications (including RFID and UWB), etc.

The I/O controller 620 may operate in conjunction with network interface 685 and/or storage interface 680. The network interface 685 may enable system 600 with the ability to communicate with client devices (e.g., device 105 of FIG. 1), and/or other devices over the network 115 of FIG. 1. Network interface 685 may provide wired and/or wireless network connections. In some cases, network interface 685 may include an Ethernet adapter or Fibre Channel adapter. Storage interface 680 may enable system 600 to access one or more data storage devices. The one or more data storage devices may include two or more data tiers each. The storage interface 680 may include one or more of an Ethernet adapter, a Fibre Channel adapter, Fibre Channel Protocol (FCP) adapter, a SCSI adapter, and iSCSI protocol adapter.

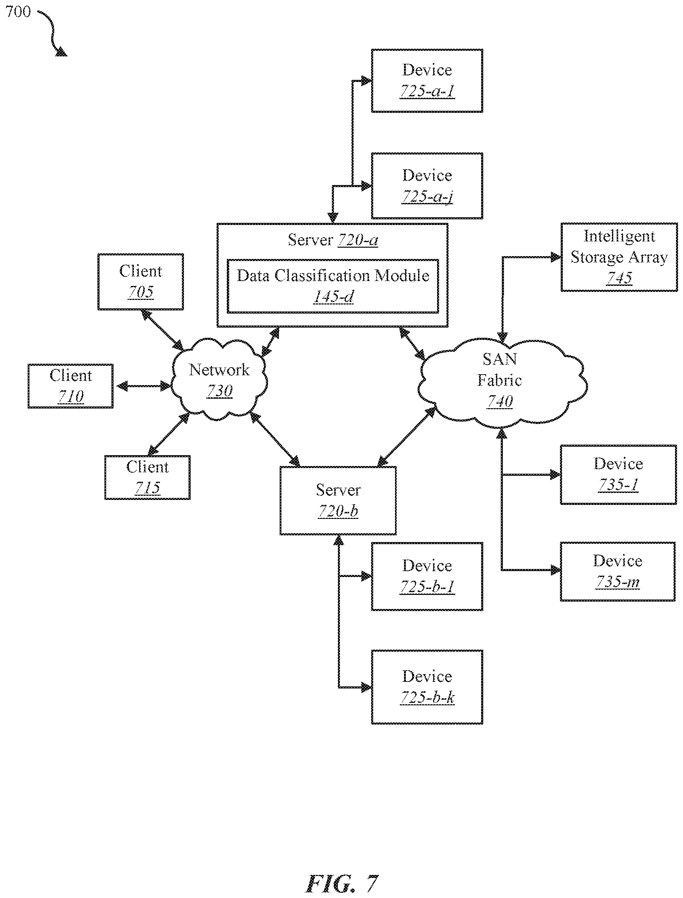

**FIG. 7** is a block diagram depicting a network architecture 700 in which client systems 705, 710 and 715, as well as storage servers 720-a and 720-b (any of which can be implemented using computer system 600), are coupled to a network 730. In one embodiment, data classification module 145-d may be located within one of the storage servers 720-a, 720-b to implement the present systems and methods. Data classification module 145-d may be one example of data classification module 145 depicted in FIGs. 1, 2, 3, and/or 6. The storage server 720-a is further depicted as having storage devices 725-a-1 through 725-a-j directly attached, and storage server 720-b is depicted with storage devices 725-b-1 through 725-b-k directly attached. SAN fabric 740 supports access to storage devices 735-1 through 735-m by storage servers 720-a and 720-b, and so by client systems 705, 710 and 715 via network 730. Intelligent storage array 745 is also shown as an example of a specific storage device accessible via SAN fabric 740.

With reference to computer system 600, network interface 685 or some other method can be used to provide connectivity from each of client computer systems 705, 710 and 715 to network 730. Client systems 705, 710 and 715 are able to access information on storage server 720-a or 720-b using, for example, a web browser or other client software (not shown). Such a client allows client systems 705, 710 and 715 to access data hosted by storage server 720-a or 720-b or one of storage devices 725-a-1 to 725-a-j, 725-b-1 to 725-b-k, 735-1 to 735-m or intelligent storage array 745. FIG. 7 depicts the use of a network such as the Internet for exchanging data, but the present systems and methods are not limited to the Internet or any particular network-based environment.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered exemplary in nature since many other architectures can be implemented to achieve the same functionality.

The process parameters and sequence of steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

Furthermore, while various embodiments have been described and/or illustrated herein in the context of fully functional computing systems, one or more of these exemplary embodiments may be distributed as a program product in a variety of forms, regardless of the particular type of computer-readable media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the present systems and methods and their practical applications, to thereby enable others skilled in the art to best utilize the present systems and methods and various embodiments with various modifications as may be suited to the particular use contemplated.

Unless otherwise noted, the terms "a" or "an," as used in the specification and claims, are to be construed as meaning "at least one of." In addition, for ease of use, the words "including" and "having," as used in the specification and claims, are interchangeable with and have the same meaning as the word "comprising." In addition, the term "based on" as used in the specification and the claims is to be construed as meaning "based at least upon."

As used herein, the term "security action" may refer to any number of actions the systems described herein may take after determining that a file likely includes some type of malware. For example, types of security actions may include preventing the file from performing any actions on the computing device, alerting an administrator to the potential maliciousness of the file, quarantine the file, delete the file, block a download of the file, and/or warn a user about the file. In addition, the systems described herein may perform a security action on objects other than a file. For example, the systems described herein may blacklist malicious URLs and/or IP addresses. Thus, the security actions in conjunction with the methods and systems described herein may improve the security and operating integrity of one or more computing devices by protecting the hardware, firmware, software, or any combination thereof of the one or more computing devices from malicious attack. It should be appreciated that these are not exhaustive lists of the types of security actions which may be performed by the systems described herein. Other security actions are also included in this disclosure.

## Claims

1. A method for classifying application data, comprising:
detecting initiation of an application (140);
detecting an action performed relative to the application (140), wherein the application (140) is configured to encrypt at least a portion of data associated with the detected action;
capturing the data associated with the detected action before the application (140) encrypts the at least portion of the data;
analyzing the captured data;
identifying a packet flow associated with the captured data;
identifying the packet flow among a plurality of unidentified packet flows; and
applying a network management policy (160) to the identified packet flow based at least in part on the analyzing the captured data.

2. The method of claim 1, further comprising:
determining at least one of a user identifier associated with the detected initiation of the application (140), an initiator of the application (140), a size of a file associated with the application (140), a file hash of the file, a file name, or any combination thereof.

3. The method of claim 2, further comprising:
associating the identified packet flow with at least one of the captured data, the determined user identifier, the determined initiator of the application (140), the determined size of the file associated with the application (140), the determined file hash of the file, a file name, or any combination thereof.

4. The method of claim 3, further comprising:
classifying the captured data based at least in part on the analyzing of the captured data, the detected action, an application category associated with the application (140), or any combination thereof; and
applying the network management policy (160) to the identified packet flow based at least in part on the classification of the captured data.

5. The method of claim 1, the detected action including at least one of a user input relative to a user interface menu item of the application (140), a user input relative to a button of the application (140), a user input relative to an input box of the application (140), detecting data entered in the application (140), identifying a file upload to the application (140), identifying a file download from the application (140), identifying a file deletion in relation to the application (140), identifying a modification of data via the application (140), play a media file, stream a media file, delete a file from cloud storage, initiate a chat session, start a video call, or any combination thereof.

6. The method of claim 5, further comprising:
identifying the button of the application (140); and
interpreting the detected action based at least in part on the identification of the button in relation to a detected cursor location.

7. The method of claim 1, further comprising:
identifying an identifier associated with the captured data, the identifier including at least one of an application protocol, a layer-4 protocol, a layer-3 protocol, a layer-3 address, a layer-4 port number, or any combination thereof.

8. The method of claim 1, further comprising:
performing a security action based at least in part on the analyzing, performing the security action comprising:
detecting suspicious activity associated with the application (140); and
identifying one or more devices of an intranet associated with the suspicious network traffic.

9. The method of claim 8, performing the security action comprising:
mapping the suspicious traffic in relation to the one or more devices of the intranet; and
identifying an origin of the suspicious network traffic based at least in part on the mapping.

10. The method of claim 1, the application (140) including at least one of an online application accessed via a web browser, a cloud based application, a web based application, a mobile application configured to access the Internet, and a desktop application configured to access the Internet.

11. A computing device configured for classifying application data, further comprising:
a processor (610);
memory (615) in electronic communication with the processor (610), wherein the memory stores computer executable instructions that when executed by the processor (610) cause the processor (610) to perform the steps of:
detecting initiation of an application (140);
detecting an action performed relative to the application (140),
wherein the application (140) is configured to encrypt at least a portion of data associated with the detected action;
capturing the data associated with the detected action before the application (140) encrypts the at least portion of the data;
analyzing the captured data;
identifying a packet flow associated with the captured data;
identifying the packet flow among a plurality of unidentified packet flows; and
applying a network management policy (160) to the identified packet flow
based at least in part on the analyzing the captured data.

12. The computing device of claim 11, wherein the instructions executed by the processor cause the processor to perform the steps of:
determining at least one of a user identifier associated with the detected initiation of the application (140), an initiator of the application (140), a size of a file associated with the application (140), a file hash of the file, a file name, or any combination thereof.

13. The computing device of claim 12, wherein the instructions executed by the processor cause the processor to perform the steps of:
associating the identified packet flow with at least one of the captured data, the determined user identifier, the determined initiator of the application (140), the determined size of the file associated with the application (140), the determined file hash of the file, a file name, or any combination thereof.

14. The computing device of claim 13, wherein the instructions executed by the processor cause the processor to perform the steps of:
classifying the captured data based at least in part on the analyzing of the captured data, the detected action, an application category associated with the application (140), or any combination thereof; and
applying the network management policy (160) to the identified packet flow based at least in part on the classification of the captured data.

15. A non-transitory computer-readable storage medium storing computer executable instructions that when executed by a processor (610) cause the processor (610) to perform the steps of:
detecting initiation of an application (140);
detecting an action performed relative to the application (140), wherein the application (140) is configured to encrypt at least a portion of data associated with the detected action;
capturing the data associated with the detected action before the application (140) encrypts the at least portion of the data;
analyzing the captured data;
identifying a packet flow associated with the captured data;
identifying the packet flow among a plurality of unidentified packet flows; and
applying a network management policy (160) to the identified packet flow based at least in part on the analyzing the captured data.

## Patentansprüche

1. Ein Verfahren zur Klassifizierung von Anwendungsdaten, das Verfahren aufweisend:
Detektieren eines Initiierens einer Anwendung (140);
Detektieren einer Handlung, die in Bezug auf die Anwendung (140) durchgeführt wird, wobei die Anwendung (140) zum Verschlüsseln von zumindest einem Teil von Daten konfiguriert ist, die mit der detektierten Handlung assoziiert sind;
Erfassen der mit der detektierten Handlung verbundenen Daten, bevor die Anwendung (140) den mindestens einen Teil der Daten verschlüsselt;
Analysieren der erfassten Daten;
Identifizieren eines mit den erfassten Daten verbundenen Paketflusses;
Identifizieren des Paketflusses unter einer Mehrzahl von nicht identifizierten Paketflüssen; und
Anwenden einer Netzverwaltungspolitik (160) auf den identifizierten Paketfluss zumindest teilweise basierend auf dem Analysieren der erfassten Daten.

2. Das Verfahren nach Anspruch 1, ferner aufweisend:
Bestimmen von mindestens einem der folgenden Elemente: einem Benutzeridentifikator, der mit dem detektierten Initiieren der Anwendung (140) assoziiert ist, einem Initiator der Anwendung (140), einer Größe einer mit der Anwendung (140) assoziierten Datei, einem Datei-Hash der Datei, einem Dateinamen oder einer beliebigen Kombination davon.

3. Das Verfahren nach Anspruch 2, ferner aufweisend:
Assoziieren des identifizierten Paketflusses mit mindestens einem der erfassten Daten, der bestimmten Benutzerkennung, dem bestimmten Initiator der Anwendung (140), der ermittelten Größe der mit der Anwendung (140) assoziierten Datei, dem ermittelten Datei-Hash der Datei, einem Dateinamen oder einer beliebigen Kombination davon.

4. Das Verfahren nach Anspruch 3, ferner aufweisend:
Klassifizieren der erfassten Daten zumindest teilweise basierend auf der Analyse der erfassten Daten, der detektierten Handlung, einer mit der Anwendung (140) assoziierten Anwendungskategorie oder einer beliebigen Kombination davon; und
Anwenden der Netzverwaltungspolitik (160) auf den identifizierten Paketfluss zumindest teilweise basierend auf der Klassifizierung der erfassten Daten.

5. Das Verfahren nach Anspruch 1, wobei die detektierte Handlung mindestens eine der folgenden Handlungen aufweist: eine Benutzereingabe in Bezug auf einen Menüpunkt einer Benutzerschnittstelle der Anwendung (140), eine Benutzereingabe in Bezug auf eine Schaltfläche der Anwendung (140), eine Benutzereingabe in Bezug auf ein Eingabefeld der Anwendung (140), ein Detektieren von in die Anwendung (140) eingegebenen Daten, ein Identifizieren eines Dateiuploads zu der Anwendung (140), ein Identifizieren eines Dateidownloads von der Anwendung (140), ein Identifizieren eines Dateilöschens in Bezug auf die Anwendung (140), ein Identifizieren einer Änderung von Daten über die Anwendung (140), ein Abspielen einer Mediendatei, ein Streamen einer Mediendatei, ein Löschen einer Datei aus einem Cloud-Speicher, ein Initiieren einer Chat-Sitzung, ein Starten eines Videoanrufs oder einer beliebigen Kombination davon.

6. Das Verfahren nach Anspruch 5, ferner aufweisend:
Identifizieren der Schaltfläche der Anwendung (140); und
Interpretieren der detektierten Handlung zumindest teilweise basierend auf dem Identifizieren der Schaltfläche in Bezug auf eine erkannte Cursorposition.

7. Das Verfahren nach Anspruch 1, ferner aufweisend:
Identifizieren eines Identifikators, der mit den erfassten Daten assoziiert ist, wobei der Identifikator mindestens eines der folgenden Elemente aufweist: ein Anwendungsprotokoll, ein Schicht-4-Protokoll, ein Schicht-3-Protokoll, eine Schicht-3-Adresse, eine Schicht-4-Portnummer oder eine beliebige Kombination davon.

8. Das Verfahren nach Anspruch 1, ferner aufweisend:
Durchführen einer Sicherheitshandlung, die zumindest teilweise auf dem Analysieren basiert, wobei das Durchführen der Sicherheitshandlung Folgendes aufweist:
Detektieren verdächtiger Aktivitäten, die mit der Anwendung (140) assoziiert sind; und
Identifizieren eines oder mehrerer Geräte eines Intranets, die mit dem verdächtigen Netzwerkverkehr assoziiert sind.

9. Das Verfahren nach Anspruch 8, wobei das Durchführen der Sicherheitshandlung Folgendes aufweist:
Mappen des verdächtigen Datenverkehrs in Bezug auf das eine oder die mehreren Geräte des Intranets; und
Identifizieren eines Ursprungs des verdächtigen Netzwerkverkehrs zumindest teilweise basierend auf dem Mapping.

10. Das Verfahren nach Anspruch 1, wobei die Anwendung (140) mindestens eine Online-Anwendung, auf die über einen Webbrowser zugegriffen wird, eine cloudbasierte Anwendung, eine webbasierte Anwendung, eine für den Zugriff auf das Internet konfigurierte mobile Anwendung oder eine für den Zugriff auf das Internet konfigurierte Desktop-Anwendung aufweist.

11. Ein Computergerät, das zum Klassifizieren von Anwendungsdaten konfiguriert ist, ferner aufweisend:
einen Prozessor (610);
Speicher (615) in elektronischer Kommunikation mit dem Prozessor (610), wobei der Speicher computerausführbare Anweisungen speichert, die, wenn sie von dem Prozessor (610) ausgeführt werden, den Prozessor (610) veranlassen, die folgenden Schritte durchzuführen:
Detektieren eines Initiierens einer Anwendung (140);
Detektieren einer Handlung, die in Bezug auf die Anwendung (140) durchgeführt wird, wobei die Anwendung (140) zum Verschlüsseln von zumindest einem Teil von Daten konfiguriert ist, die mit der detektierten Handlung assoziiert sind;
Erfassen der mit der detektierten Handlung verbundenen Daten, bevor die Anwendung (140) den mindestens einen Teil der Daten verschlüsselt;
Analysieren der erfassten Daten;
Identifizieren eines mit den erfassten Daten verbundenen Paketflusses;
Identifizieren des Paketflusses unter einer Mehrzahl von nicht identifizierten Paketflüssen; und
Anwenden einer Netzverwaltungspolitik (160) auf den identifizierten Paketfluss zumindest teilweise basierend auf dem Analysieren der erfassten Daten.

12. Das Computergerät nach Anspruch 11, wobei die vom Prozessor ausgeführten Anweisungen den Prozessor veranlassen, die folgenden Schritte durchzuführen:
Bestimmen von mindestens einem der folgenden Elemente: einem Benutzeridentifikator, der mit dem detektierten Initiieren der Anwendung (140) assoziiert ist, einem Initiator der Anwendung (140), einer Größe einer mit der Anwendung (140) assoziierten Datei, einem Datei-Hash der Datei, einem Dateinamen oder einer beliebigen Kombination davon.

13. Das Computergerät nach Anspruch 12, wobei die vom Prozessor ausgeführten Anweisungen den Prozessor veranlassen, die folgenden Schritte durchzuführen:
Assoziieren des identifizierten Paketflusses mit mindestens einem der erfassten Daten, der bestimmten Benutzerkennung, dem bestimmten Initiator der Anwendung (140), der ermittelten Größe der mit der Anwendung (140) assoziierten Datei, dem ermittelten Datei-Hash der Datei, einem Dateinamen oder einer beliebigen Kombination davon.

14. Das Computergerät nach Anspruch 13, wobei die vom Prozessor ausgeführten Anweisungen den Prozessor veranlassen, die folgenden Schritte durchzuführen:
Klassifizieren der erfassten Daten zumindest teilweise basierend auf der Analyse der erfassten Daten, der detektierten Handlung, einer mit der Anwendung (140) assoziierten Anwendungskategorie oder einer beliebigen Kombination davon; und
Anwenden der Netzverwaltungspolitik (160) auf den identifizierten Paketfluss zumindest teilweise basierend auf der Klassifizierung der erfassten Daten.

15. Ein nicht-transitorisches, computerlesbares Speichermedium, das computerausführbare Anweisungen speichert, die, wenn sie von einem Prozessor (610) ausgeführt werden, den Prozessor (610) veranlassen, die folgenden Schritte durchzuführen:
Detektieren eines Initiierens einer Anwendung (140);
Detektieren einer Handlung, die in Bezug auf die Anwendung (140) durchgeführt wird, wobei die Anwendung (140) zum Verschlüsseln von zumindest einem Teil von Daten konfiguriert ist, die mit der detektierten Handlung assoziiert sind;
Erfassen der mit der detektierten Handlung verbundenen Daten, bevor die Anwendung (140) den mindestens einen Teil der Daten verschlüsselt;
Analysieren der erfassten Daten;
Identifizieren eines mit den erfassten Daten verbundenen Paketflusses;
Identifizieren des Paketflusses unter einer Mehrzahl von nicht identifizierten Paketflüssen; und
Anwenden einer Netzverwaltungspolitik (160) auf den identifizierten Paketfluss zumindest teilweise basierend auf dem Analysieren der erfassten Daten.

## Revendications

1. Procédé de classification de données d'application, comprenant :
la détection d'une initiation d'une application (140) ;
la détection d'une action réalisée en ce qui concerne l'application (140), dans lequel l'application (140) est configurée pour chiffrer au moins une partie de données associées à l'action détectée ;
la capture des données associées à l'action détectée avant que l'application (140) ne chiffre au moins une partie des données ;
l'analyse des données capturées ;
l'identification d'un flux de paquets associé aux données capturées ;
l'identification du flux de paquets parmi une pluralité de flux de paquets non identifiés ; et
l'application d'une politique de gestion de réseau (160) au flux de paquets identifié sur la base au moins en partie de l'analyse des données capturées.

2. Procédé selon la revendication 1, comprenant en outre :
la détermination d'au moins un élément parmi un identifiant d'utilisateur associé à l'initiation détectée de l'application (140), un initiateur de l'application (140), une taille d'un fichier associé à l'application (140), un hachage de fichier du fichier, un nom de fichier ou toute combinaison de ceux-ci.

3. Procédé selon la revendication 2, comprenant en outre :
l'association du flux de paquets identifié à au moins un élément parmi les données capturées, l'identifiant d'utilisateur déterminé, l'initiateur déterminé de l'application (140), la taille déterminée du fichier associé à l'application (140), le hachage de fichier déterminé du fichier, un nom de fichier, ou toute combinaison de ceux-ci.

4. Procédé selon la revendication 3, comprenant en outre :
la classification des données capturées sur la base au moins en partie de l'analyse des données capturées, de l'action détectée, d'une catégorie d'application associée à l'application (140), ou de toute combinaison de ceux-ci ; et
l'application de la politique de gestion de réseau (160) au flux de paquets identifié sur la base au moins en partie de la classification des données capturées.

5. Procédé selon la revendication 1, l'action détectée incluant au moins un élément parmi une entrée d'utilisateur en ce qui concerne un élément de menu d'interface utilisateur de l'application (140), une entrée d'utilisateur en ce qui concerne un bouton de l'application (140), une entrée d'utilisateur en ce qui concerne une boîte d'entrée de l'application (140), la détection de données saisies dans l'application (140), l'identification d'un chargement de fichier dans l'application (140), l'identification d'un téléchargement de fichier de l'application (140), l'identification d'une suppression de fichier en relation avec l'application (140), l'identification d'une modification de données via l'application (140), la lecture d'un fichier multimédia, le streaming d'un fichier multimédia, la suppression d'un fichier d'un stockage dans le cloud, l'initiation d'une session de conversation, le démarrage d'une visioconférence, ou toute combinaison de ceux-ci.

6. Procédé selon la revendication 5, comprenant en outre :
l'identification du bouton de l'application (140) ; et
l'interprétation de l'action détectée sur la base au moins en partie de l'identification du bouton en relation avec un emplacement de curseur détecté.

7. Procédé selon la revendication 1, comprenant en outre :
l'identification d'un identifiant associé aux données capturées, l'identifiant incluant au moins un élément parmi un protocole d'application, un protocole d'application de couche 4, un protocole d'application de couche 3, une adresse de couche 3, un numéro de port de couche 4, ou toute combinaison de ceux-ci.

8. Procédé selon la revendication 1, comprenant en outre :
la réalisation d'une action de sécurité sur la base au moins en partie de l'analyse, la réalisation de l'action de sécurité comprenant :
la détection d'une activité suspecte associée à l'application (140) ; et
l'identification d'un ou plusieurs dispositifs d'un intranet associé au trafic de réseau suspect.

9. Procédé selon la revendication 8, la réalisation de l'action de sécurité comprenant :
le mappage du trafic suspect en relation avec les un ou plusieurs dispositifs de l'intranet ; et
l'identification d'une origine du trafic de réseau suspect sur la base au moins en partie du mappage.

10. Procédé selon la revendication 1, l'application (140) incluant au moins un élément parmi une application en ligne accessible via un navigateur Web, une application basée sur le cloud, une application basée sur le Web, une application mobile configurée pour accéder à l'Internet, et une application de bureau configurée pour accéder à l'Internet.

11. Dispositif informatique configuré pour classifier des données d'application, comprenant en outre :
un processeur (610) ;
une mémoire (615) en communication électronique avec le processeur (610), dans lequel la mémoire stocke des instructions exécutables par ordinateur qui, lorsqu'elles sont exécutées par le processeur (610), amènent le processeur (610) à réaliser les étapes suivantes :
la détection d'une initiation d'une application (140) ;
la détection d'une action réalisée en ce qui concerne l'application (140), dans lequel l'application (140) est configurée pour chiffrer au moins une partie de données associées à l'action détectée ;
la capture des données associées à l'action détectée avant que l'application (140) ne chiffre au moins une partie des données ;
l'analyse des données capturées ;
l'identification d'un flux de paquets associé aux données capturées ;
l'identification du flux de paquets parmi une pluralité de flux de paquets non identifiés ; et
l'application d'une politique de gestion de réseau (160) au flux de paquets identifié sur la base au moins en partie de l'analyse des données capturées.

12. Dispositif informatique selon la revendication 11, dans lequel les instructions exécutées par le processeur amènent le processeur à réaliser les étapes suivantes :
la détermination d'au moins un élément parmi un identifiant d'utilisateur associé à l'initiation détectée de l'application (140), un initiateur de l'application (140), une taille d'un fichier associé à l'application (140), un hachage de fichier du fichier, un nom de fichier ou toute combinaison de ceux-ci.

13. Dispositif informatique selon la revendication 12, dans lequel les instructions exécutées par le processeur amènent le processeur à réaliser les étapes suivantes :
l'association du flux de paquets identifié à au moins un élément parmi les données capturées, l'identifiant d'utilisateur déterminé, l'initiateur déterminé de l'application (140), la taille déterminée du fichier associé à l'application (140), le hachage de fichier déterminé du fichier, un nom de fichier, ou toute combinaison de ceux-ci.

14. Dispositif informatique selon la revendication 13, dans lequel les instructions exécutées par le processeur amènent le processeur à réaliser les étapes suivantes :
la classification des données capturées sur la base au moins en partie de l'analyse des données capturées, de l'action détectée, d'une catégorie d'application associée à l'application (140), ou de toute combinaison de ceux-ci ; et
l'application de la politique de gestion de réseau (160) au flux de paquets identifié sur la base au moins en partie de la classification des données capturées.

15. Support de stockage non transitoire lisible par ordinateur stockant des instructions exécutables par ordinateur qui, lorsqu'elles sont exécutées par un processeur (610), amènent le processeur (610) à réaliser les étapes suivantes :
la détection d'une initiation d'une application (140) ;
la détection d'une action réalisée en ce qui concerne l'application (140), dans lequel l'application (140) est configurée pour chiffrer au moins une partie de données associées à l'action détectée ;
la capture des données associées à l'action détectée avant que l'application (140) ne chiffre au moins une partie des données ;
l'analyse des données capturées ;
l'identification d'un flux de paquets associé aux données capturées ;
l'identification du flux de paquets parmi une pluralité de flux de paquets non identifiés ; et
l'application d'une politique de gestion de réseau (160) au flux de paquets identifié sur la base au moins en partie de l'analyse des données capturées.
